# EUROPÄISCHE PATENTSCHRIFT

(11) **EP 1 969 308 B1**
(45) Veröffentlichungstag und Bekanntmachung des Hinweises auf die Patenterteilung: **29.10.2014**
(21) Anmeldenummer: 06819527.0
(22) Anmeldetag: 16.11.2006
(51) Int. Cl.: G01B 11/275

(54) **VERFAHREN ZUR OPTISCHEN FAHRWERKSVERMESSUNG**
METHOD FOR OPTICALLY MEASURING A CHASSIS
PROCÉDÉ DE MESURE OPTIQUE DE CHÂSSIS

(30) Priorität: 29.12.2005 DE 102005063082
(43) Veröffentlichungstag der Anmeldung: 17.09.2008
(73) Patentinhaber: Robert Bosch GmbH, 70442 Stuttgart (DE)
(72) Erfinder: UFFENKAMP, Volker, 71638 Ludwigsburg (DE); NOBIS, Guenter, 72622 Nuertingen (DE)
(86) Internationale Anmeldenummer: PCT/EP2006/068540
(87) Internationale Veröffentlichungsnummer: WO 2007/080012

(56) Entgegenhaltungen:
- EP-A- 1 505 367
- DE-A1- 19 757 760
- FR-A- 2 808 082
- US-A- 4 745 469
- US-A- 5 532 816

## Beschreibung

Die Erfindung bezieht sich auf ein Verfahren zur optischen Fahrwerksvermessung an einem Prüfplatz nach dem Oberbegriff des Anspruchs 1.

### Stand der Technik

Ein Verfahren zur optischen Fahrwerksvermessung bei dem von einer Oberflächenstruktur eines Fahrzeugs umfassend zumindest ein Rad und einen das Rad umgebenden Karosserieausschnitt reflektierte Strahlung von einer Messvorrichtung mittels entsprechender Sensorik erfasst und durch Auswertung von durch die erfasste Strahlung gewonnenen Positionsdaten die Radebene und der Radmittelpunkt ermittelt werden, ist aus EP 1505 367 A2 bekannt. Bei diesem Verfahren wird die Oberflächenstruktur des Rades und eines Ausschnitts der Fahrzeugkarosserie mittels eines von der Messvorrichtung ausgesandten Lichtmusters flächenhaft beleuchtet und abgetastet. Mit den Schnittpunkten der Profillinien am Rad und am Radausschnitt der Karosserie werden die räumliche Lage der Oberflächenpunkte anhand der bekannten relativen Lage der Beleuchtungseinheit und der Kamera zueinander bestimmt und daraus die Radebene und der Radmittelpunkt zur Bestimmung von Spur und Sturz ermittelt.

Ein ähnliches Verfahren geht aus FR 2 808 082 A1 hervor, bei dem das Fahrzeugrad mittels paralleler Lichtstrahlen beleuchtet wird und die Oberflächenstruktur von einer Kamera erfasst und von einem Prozessor ausgewertet wird. Die Koordinaten der Oberflächenpunkte werden dabei anhand der bekannten relativen Lage der Beleuchtungseinheit und der Kamera zueinander bestimmt.

Bei dem aus US 4,745,469 A bekannten Verfahren zur optischen Fahrwerksvermessung wird ein sich drehendes Rad eines Kraftfahrzeugs mit Laserlicht beleuchtet. Die ausgeleuchtete Oberflächenstruktur wird mittels einer Kamera erfasst und von einem Prozessor werden die Koordinaten berechnet. Bei der Berechnung der Koordinaten wird die bekannte Zuordnung des Lasers und der Kamera herangezogen und daraus die Koordinaten der 3D-Punkte am Fahrzeugrad ermittelt.

Weitere Verfahren zur optischen Fahrwerksvermessung sind in DE 197 57 763 A1 und EP 1042 643 B1 angegeben. Bei diesen bekannten Verfahren werden mit Hilfe von Bildaufnahmeeinrichtungen, insbesondere Kameras, Bezugsmerkmale am Prüfplatz und weiterhin Radmerkmale und Karosseriemerkmale erfasst und auf der Basis dieser Informationen die Fahrachse und weiterhin Rad- und Achsgeometriedaten ermittelt, wobei nach der DE 197 57 763 A1 die Messung im Stand und bei dem Verfahren nach der EP 1 042 643 B1 die Messung während der Vorbeifahrt an der Messvorrichtung erfolgt. Zum Erfassen der Merkmale wird Raumlicht im Prüfplatzbereich genutzt, wobei die Merkmale insbesondere des Rades und der Karosserie angebrachte Marken oder vorhandene charakteristische Strukturen sein können. Es kann aber auch an der Messvorrichtung eine spezielle Beleuchtung beispielsweise mittels Leuchtdioden vorgesehen sein, wobei auch spezielle retroreflektierende Messmarken am Rad bzw. der Karosserie angebracht sein können. Auch sind nähere Angaben zu der Art und Erfassung der Rad- und Achsgeometriedaten aus den mittels der Marken und/oder Oberflächenstrukturen gewonnenen geometrischen Informationen in diesen Druckschriften und darauf basierenden weiteren Patentanmeldungen gemacht. In der Praxis hat sich gezeigt, dass für die Gewinnung genauer und zuverlässiger Messergebnisse die Anbringung gut erfassbarer Marken günstig ist, deren Adaption an Rad und Karosserie jedoch einen nicht unerheblichen Aufwand verlangt, obwohl gegenüber anderen Systemen zur Fahrwerksvermessung mit diesen bekannten Systemen die Messung insgesamt erheblich erleichtert werden konnte.

### Vorteile der Erfindung

Der Erfindung liegt die Aufgabe zugrunde, ein Verfahren zur optischen Fahrwerksvermessung bereit zu stellen, mit dem möglichst genaue und zuverlässige Messergebnisse bei möglichst geringem Aufwand erhalten werden.

Diese Aufgabe wird mit den Merkmalen des Anspruches 1 gelöst. Hierbei ist vorgesehen, dass die Oberflächenstruktur zumindest des Ausschnitts der Fahrzeugkarosserie und zumindest des Rades mittels eines von der Messvorrichtung ausgesandten Laserstrahls flächenhaß oder zumindest in zwei beliebigen Linien, welche Rad und Karosserie gemeinsam erfassen, abgetastet wird und dass als charakteristische Strukturen mindestens zwei Oberflächenprofile aus der abgetasteten Oberflächenstruktur bspw. unter Zugrundelegung einer 3D-Punktwolke gewonnen werden. An den Schnittpunkten der Profillinien und z.B. dem Felgenrand oder anderen rotationssymmetrischen Konturen am Rad sowie dem Karosserieausschnitt werden als Positionsdaten die räumliche Lage charakteristischer Oberflächenpunkte bestimmt, aus denen unmittelbar die Fahrwerksdaten ermittelt werden können.

Hierbei entfällt eine Anbringung und Adaption von Messmarken am Fahrzeugrad bzw. der Karosserie, während mittels der Messvorrichtung mit den genannten Maßnahmen aus vorhandenen Oberflächenstrukturen die für die Messung herangezogenen Oberflächenpunkte zuverlässig und eindeutig gewonnen und der Auswertung unterzogen werden, so dass genaue Messergebnisse erhalten werden, insbesondere wenn leistungsfähige Prozessoren und Rechner in Verbindung mit entsprechenden Sensoren zur Erfassung von Oberflächenstrukturen verwendet werden.

Die Genauigkeit kann erhöht werden, indem die Anzahl der Oberflächenprofile erhöht wird, wobei durch Anwendung entsprechender Algorithmen eine gegebenenfalls geringere Einzelgenauigkeit durch Mittelung kompensiert werden kann. Der Verzicht auf eine Adaption von Marken an Rad und Karosserie vereinfacht die Bedienung des Achsmesssystems wesentlich, u.a. weil keine Einschränkung bezüglich Material der Karosserie, kein Entfernen von Radkappen und kein zusätzlicher Arbeitsaufwand zur Adaption mit der Messung verbunden sind.

Die Auswertung wird dadurch ermöglicht, dass die räumliche Lage von für die Erfassung der Oberflächenstruktur abgetasteten Oberflächenpunkten mittels Polarkoordinaten bestimmt wird, die durch die horizontale und vertikale Richtung des ausgesandten Laserstrahles (Abtastrichtung) sowie die Entfernung zwischen Oberflächenpunkt und Empfangssensor für den reflektierten Laserstrahl der Messvorrichtung nach dem Prinzip einer Laufzeit- und/oder Phasendifferenzmessung bestimmt werden.

Verschiedene Ausgestaltungsvarianten bestehen darin, dass der Laserstrahl zur sequentiellen Abtastung mechanisch abgelenkt wird oder dass die Abtastung durch Ansteuerung eines unbewegten Systems (beispielsweise LCD-Matrix) erfolgt, bei dem die Entfernungsmessung für jedes Matrixelement durchgeführt wird.

Die Messung erfolgt vorteilhaft in der Weise, dass zum Bestimmen der Radebene, des Radmittelpunktes und ggf. des das Rad umgebenden Karosserieausschnitts eine Vielzahl von Oberflächenpunkten als 3D-Punktwolke, mindestens jedoch drei Schnittpunkte zwischen zwei Oberflächenprofilen und z.B. dem Felgenrand oder anderen rotationssymmetrischen Konturen am Rad, sowie dem Radausschnitt herangezogen werden.

Ein wichtiger Anwendungsfall besteht darin, dass aus der Kante des Radausschnitts der Karosserie der Beladungszustand des Rades (Radlast) und aus der Radebene und dem Radmittelpunkt Spur und Sturz bestimmt werden.

Weitere Vorteile für die Messung ergeben sich dadurch, dass bei der Abtastung signifikante Oberflächenmerkmale am Rad wie Ventil, Lochbild, Beschriftung, Schmutz und/oder eine Beschädigung detektiert werden und dass auf der Grundlage dieser Oberflächenmerkmale ein Felgenschlag bei Rotation des Rades (z.B. beim Abrollen auf der Fahrbahn) erfasst und bei der weiteren Auswertung berücksichtigt wird.

Eine vorteilhafte Vorgehensweise bei der Messung besteht darin, dass die Messung während einer Vorbeifahrt des Fahrzeugs durchgeführt wird und Fahrtrichtungsdaten aufgrund einer Erfassung der Bewegungsrichtung von Karosserie-Oberflächenstrukturen gewonnen werden.

### Zeichnungen

Die Erfindung wird nachfolgend anhand von Ausführungsbeispielen unter Bezugnahme auf die Zeichnungen näher erläutert. Es zeigen:
- Fig. 1: eine schematische ausschnittsweise Ansicht eines Prüfplatzes in Fahrtrichtung mit einer Messvorrichtung und einem Teil eines zu vermessenden Fahrzeugs und
- Fig. 2A und 2B: einen Ausschnitt des Prüfplatzes nach Fig. 1 in einer seitlichen Ansicht mit eingetragenen Seitenlinien (Fig. 2A) bzw. Profillinien (Fig. 2B).

### Offenbarung der Erfindung

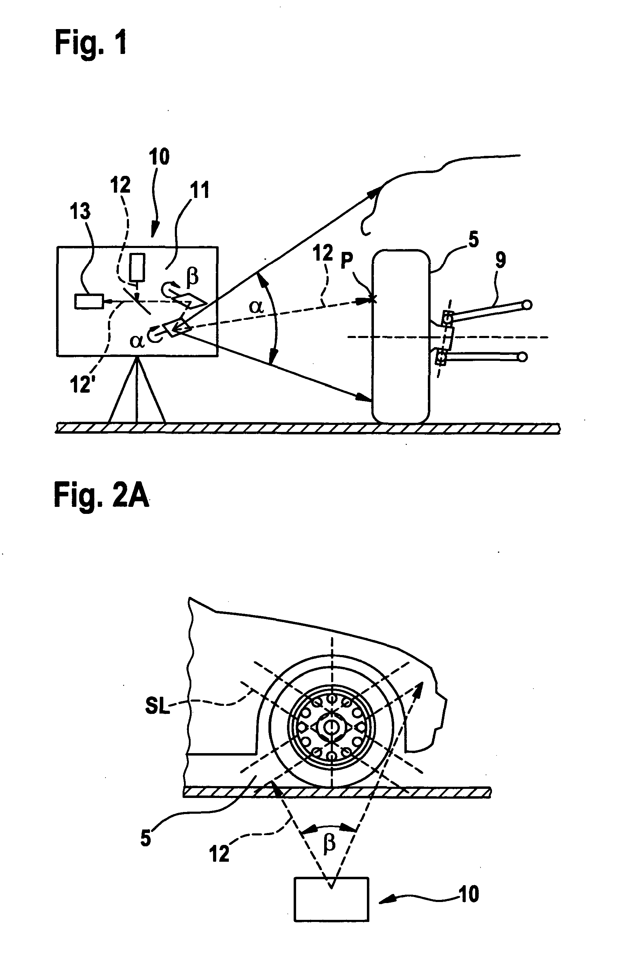

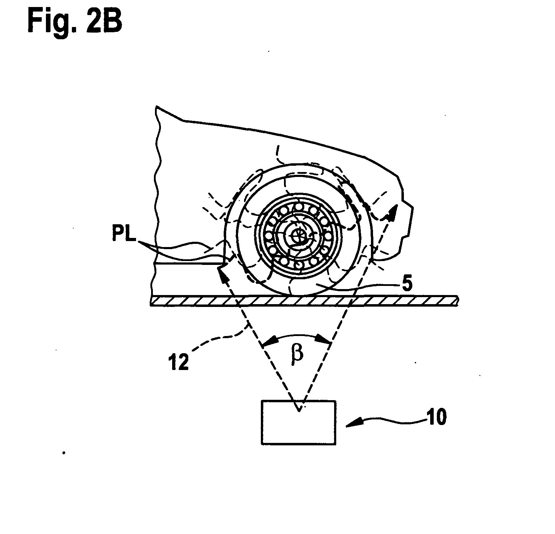

Die Fig. 1 und 2A sowie 2B zeigen ein seitlich eines Fahrzeuges im Bereich eines Rades 5 aufgestelltes Messinstrument einer Messvorrichtung 10. Das Messinstrument umfasst einen Laserscanner 11, der einen Messstrahl 12 unter definierten Ablenkungswinkeln α, β aussendet, sowie eine Sensorik 13, die den reflektierten Messtrahl 12' und seine Laufzeit bzw. Phasendifferenz erfasst. An das Messinstrument sind des Weiteren dem Messaufwand entsprechend leistungsfähige Rechner angeschlossen. Mittels der Messvorrichtung 10 lassen sich verschiedene Daten insbesondere von einer Radaufhängung 9 bestimmen.

Vom Messinstrument werden Oberflächenpunkte P unter Schwenken und Neigen des Laserstrahls bzw. Messstrahls 12 entsprechend einem Horizontalwinkel β und einem Vertikalwinkel α abgetastet und die Entfernung zwischen Messinstrument und Oberflächenpunkten P ermittelt, woraus sich die betreffende Oberflächenstruktur ergibt. Aus Schnittlinien SL des abtastenden Laserstrahls werden mit der Sensorik 13 und den anschließenden Auswerteeinrichtungen des Messinstruments Profillienien PL erfasst.

Zur dreidimensionalen Lagebestimmung der Oberflächenpunkte mit dem verwendeten Laserscanner wird das Prinzip der Bestimmung von räumlichen Polarkoordinaten angewandt, wie es aus dem Vermessungswesen bekannt ist. Die Polarkoordinaten eines Oberflächenpunktes ergeben sich aus zwei Richtungen (horizontal und vertikal) und der Entfernung zwischen dem Messinstrument und dem Oberflächenpunkt. Zur Erfassung der betrachteten Oberflächenstruktur sendet das Messinstrument den Laserstrahl bzw. Messstrahl 12 aus, der von der Objektoberfläche zu einem Empfänger der Sensorik 13 zurückreflektiert wird. Die Entfernung zum Oberflächenpunkt ergibt sich aus einer Laufzeitmessung und/oder Phasendifferenzmessung. Die Komponenten 14, 15 der Messvorrichtung 10 zur Strahlführung drehen sich um eine horizontale und vertikale Achse, so dass die Oberflächenstruktur sequentiell dreidimensional erfasst wird. Die Summe der Oberflächenpunkte P stellt eine 3D-Punktwolke dar, die die Oberfläche des erfassten Fahrzeugsausschnitts repräsentiert.

Verschiedene Vorgehensweisen sind anwendbar, nämlich bewegte Systeme, beispielsweise mit me. chanischer Ablenkung des Strahls, oder unbewegte Systeme, beispielsweise mit einer LCD-Matrix, bei der die Entfernungsmessung für jedes Matrixelement durchgeführt wird.

Jedes Fahrzeugrad weist anhand seiner Bauteile wie Reifen, Felge, Radkappe, Ventil oder dgl. eine 3D-Oberflächenstruktur auf, die zur Messung der Rad- und Achsgeometrie herangezogen werden kann, und jede Radhauskontur, insbesondere im Bereich des Radausschnittes, weist charakteristische Merkmale auf, aus denen der Beladungszustand für das jeweilige Rad abgeleitet werden kann.

Die Erfassung von mindestens zwei Oberflächenprofilen (Profillinien PL) aus der Oberflächenstruktur erlaubt die Bestimmung der Radgeometrie, wenn die beiden Profile z.B. die Radfelge mindestens dreimal schneiden. Bei einer geringen Anzahl von Oberflächenprofilen ist es vorteilhaft, wenn die Schnitte möglichst senkrecht zum Felgenrand verlaufen. Beispielsweise aus den mindestens drei Felgenrandpunkten lassen sich die Radebene sowie der Radmittelpunkt herausrechnen. Mit diesen Informationen können Spur und Sturz und gewünschtenfalls weitere interessierende Rad- und Achsgeometriedaten gewonnen werden.

Signifikante Oberflächenmerkmale am Rad wie Ventil, Lochbild, Beschriftung oder auch weitere Merkmale, wie Schmutz und Beschädigung, lassen sich detektieren. Daraus lässt sich ein möglicher Felgenschlag bei rotierendem Rad (z.B. beim Abrollen auf der Fahrbahn) ermitteln und bei der Auswertung berücksichtigen.

Erfolgt eine Messung in der Vorbeifahrt, ist die Bestimmung der Bewegung der Karosserie relativ zur Messvorrichtung erforderlich. Aus der Bewegungsbahn markanter Karosseriestrukturen wird die Fahrrichtung bzw. die Fahrachse des bewegten Fahrzeuges ermittelt.

In der Regel wird zu Beginn einer Messung ein größerer Objektausschnitt mit einem Teil der Karosserie und dem Rad erfasst. Zur Verringerung des erforderlichen Messaufwandes kann die Größe des Objektausschnitts nach Lokalisierung der interessierenden Objektstrukturen an verschiedene Fahrzeugtypen und Felgengrößen angepasst werden.

## Patentansprüche

1. Verfahren zur optischen Fahrwerksvermessung an einem Prüfplatz, bei dem von einer Oberflächenstruktur eines Fahrzeugs umfassend zumindest ein Rad und einen das Rad umgebenden Karosserieausschnitt,reflektierte Strahlung von einer Messvorrichtung mittels entsprechender Sensorik erfasst und durch Auswertung von durch die erfasste Strahlung gewonnenen Positionsdaten zumindest die Radebene und der Radmittelpunkt ermittelt werden, wobei aus der Oberflächenstruktur zumindest eines Ausschnitts der Fahrzeugkarosserie und zumindest des Rades abgetastet wird, wobei mindestens zwei Oberflächenprofile aus der abgetasteten Oberflächenstruktur gewonnen werden, und wobei aus Schnittpunkten der Profillinien und dem Felgenrand oder anderen rotationssymmetrischen Konturen am Rad sowie dem Radausschnitt der Karosserie als Positionsdaten die räumliche Lage charakteristischer Oberflächenpunkte bestimmt werden, aus denen zumindest die Radebene und der Radmittelpunkt ermittelt werden, **dadurch gekennzeichnet, dass** die Oberflächenstruktur mittels eines von der Messvorrichtung ausgesandten Laserstrahls flächenhaft oder zumindest in zwei beliebigen Linien, welche Rad und Karosserie gemeinsam erfassen, abgetastet wird, und dass die räumliche Lage von für die Erfassung der Oberflächenstruktur abgetasteten Oberflächenpunkten mittels räumlicher Polarkoordinaten bestimmt wird, die durch die horizontale und vertikale Richtung des ausgesandten Laserstrahles sowie die Entfernung zwischen Oberflächenpunkt und Empfangssensor für den reflektierten Laserstrahl der Messvorrichtung nach dem Prinzip einer Laufzeit- und/oder Phasendifferenzmessung bestimmt werden.

2. Verfahren nach Anspruch 1, **dadurch gekennzeichnet, dass** der Laserstrahl zur sequentiellen Abtastung mechanisch abgelenkt wird oder dass die Abtastung durch Ansteuerung eines unbewegten Systems erfolgt.

3. Verfahren nach Anspruch 1 oder 2, **dadurch gekennzeichnet, dass** zum Bestimmen der Radebene, des Radmittelpunktes und ggf. des Karosserieausschnitts um das Rad eine Vielzahl von Oberflächenpunkten als 3D-Punktwolke, mindestens jedoch drei Schnittpunkte zwischen zwei Oberflächenprofilen und rotationssymmetrischen Konturen des Rades herangezogen werden.

4. Verfahren nach einem der vorhergehenden Ansprüche,
**dadurch gekennzeichnet, dass** aus der Kante des Radausschnitts der Beladungszustand des Rades und aus der Radebene und dem Radmittelpunkt Spur und Sturz bestimmt werden.

5. Verfahren nach einem der vorhergehenden Ansprüche,
**dadurch gekennzeichnet, dass** bei der Abtastung signifikante Oberflächenmerkmale am Rad wie Ventil, Lochbild, Beschriftung, Schmutz und/oder eine Beschädigung detektiert werden, und dass auf der Grundlage dieser Oberflächenmerkmale ein Felgenschlag bei rotierendem Rad erfasst und bei der weiteren Auswertung berücksichtigt wird.

6. Verfahren nach einem der vorhergehenden Ansprüche,
**dadurch gekennzeichnet, dass** die Messung während einer Vorbeifahrt des Fahrzeugs durchgeführt wird und Fahrtrichtungsdaten aufgrund einer Erfassung der Bewegungsrichtung von Karosserie-Oberflächenstrukturen gewonnen werden.

## Claims

1. Method for optically measuring a chassis at a test site, in which radiation reflected by a surface structure of a vehicle comprising at least one wheel and an opening in the vehicle body surrounding the wheel is acquired by a measuring device by means of an appropriate sensor system, and at least the wheel plane and the wheel centre are determined by evaluation of position data obtained from the acquired radiation, the surface structure of at least one opening in the vehicle body and of at least the wheel being scanned, at least two surface profiles being obtained from the scanned surface structure, and the spatial position of characteristic surface points being determined as position data from intersection points of the profile lines and the wheel rim or other rotationally symmetrical contours on the wheel and the wheel opening in the vehicle body, at least the wheel plane and the wheel centre being determined from said position data, **characterized in that** by means of a laser beam emitted by the measuring device the surface structure is scanned in two dimensions, or at least in two arbitrary lines which jointly include wheel and vehicle body, and **in that** the spatial position of surface points scanned in order to acquire the surface structure is determined by means of spatial polar coordinates which are determined according to the principle of a delay time and/or phase difference measurement from the horizontal and vertical direction of the emitted laser beam and the distance between surface point and receiving sensor for the reflected laser beam of the measuring device.

2. Method according to Claim 1, **characterized in that** the laser beam is deflected mechanically for sequential scanning, or **in that** the scanning is performed by controlling a stationary system.

3. Method according to Claim 1 or 2, **characterized in that** to determine the wheel plane, the wheel centre and, if appropriate, the opening in the vehicle body around the wheel use is made of a multiplicity of surface points as a 3D point cloud, but at least three intersection points between two surface profiles and rotationally symmetrical contours of the wheel.

4. Method according to one of the preceding claims, **characterized in that** the load condition of the wheel is determined from the edge of the wheel opening, and wheel toe and camber are determined from the wheel plane and the wheel centre.

5. Method according to one of the preceding claims, **characterized in that** significant surface features on the wheel, such as valve, hole pattern, labelling, dirt and/or damage are detected during scanning, and **in that** a wheel eccentricity can be acquired for a rotating wheel on the basis of said surface features and is taken into account in the further evaluation.

6. Method according to one of the preceding claims, **characterized in that** the measurement is carried out while the vehicle is travelling past, and the travel direction data are obtained on the basis of an acquisition of the movement direction of surface structures of the vehicle body.

## Revendications

1. Procédé de mesure optique de châssis à un emplacement de contrôle, dans lequel le rayonnement réfléchi par une structure superficielle d'un véhicule comprenant au moins une roue et une détouré de carrosserie entourant la roue est détecté par un dispositif de mesure à l'aide d'un système d'analyse sensorielle correspondant et au moins le plan de roue et le point central de roue étant calculés par analyse des données de position acquises par le faisceau détecté, la structure superficielle d'au moins un détouré de la carrosserie de véhicule et d'au moins la roue étant détectée, au moins deux profilés superficiels étant acquis à partir de la structure superficielle détectée et la position dans l'espace de points superficiels caractéristiques étant déterminée à partir des points d'intersection des lignes profilées et du bord de jante ou d'autres contours symétriques en rotation au niveau de la roue ainsi que du détouré de roue de la carrosserie prenant la forme de données de position, au moins le plan de roue et le point central de roue étant calculés à partir desdits points d'intersection, **caractérisé en ce que** la structure superficielle est détectée à l'aide d'un faisceau laser émis par le dispositif de mesure suivant une logique de surface ou au moins selon deux lignes quelconques détectant ensemble la roue et la carrosserie et que la position dans l'espace des points superficiels détectés pour la détection de la structure superficielle est déterminée à l'aide des coordonnées des pôles dans l'espace déterminées par la direction horizontale et verticale du faisceau laser émis vers l'extérieur ainsi que par l'éloignement entre le point superficiel et le capteur de réception pour le faisceau laser réfléchi du dispositif de mesure, selon le principe d'une mesure de temps écoulé et/ou de différence de phases.

2. Procédé selon la revendication 1, **caractérisé en ce que** le faisceau laser est dévié de façon mécanique pour réaliser la détection séquentielle ou que la détection se produit par excitation d'un système immobile.

3. Procédé selon la revendication 1 ou 2, **caractérisé en ce qu'**une pluralité de points superficiels prenant la forme d'un nuage de points en 3D, au moins toutefois trois points d'intersection entre deux profilés superficiels et les contours symétriques en rotation de la roue sont rapprochés pour déterminer le plan de roue, le point central de roue et le cas échéant le détouré de carrosserie autour de la roue.

4. Procédé selon l'une quelconque des revendications précédentes, **caractérisé en ce que** l'état de charge de la roue est déterminé à partir de l'arête du détouré de roue et que la trajectoire et l'inclinaison sont déterminées à partir du plan de roue et du point central de roue.

5. Procédé selon l'une quelconque des revendications précédentes, **caractérisé en ce qu'**en cas de détection, des caractéristiques de surface significatives sont détectées au niveau de la roue, par exemple une valve, un gabarit de trou, une inscription, une saleté et/ou un défaut et qu'un voilage est détecté sur la base de ces caractéristiques de surface en même temps que la roue tourne et qu'il est pris en compte lors de l'analyse ultérieure.

6. Procédé selon l'une quelconque des revendications précédentes, **caractérisé en ce que** la mesure est réalisée pendant une conduite en avant du véhicule et que des données de direction d'avancement sont acquises sur la base d'une détection de la direction de déplacement des structures superficielles de carrosserie.
